# EUROPEAN PATENT APPLICATION

(11) **EP 4 365 408 A1**
(43) Date of publication of application: **08.05.2024**
(21) Application number: 23201124.7
(22) Date of filing: 02.10.2023
(51) Int. Cl.: F01D 5/14, B22D 31/00, B22F 7/00, B23P 15/02

(54) **A METHOD OF MANUFACTURING A TURBOMACHINERY COMPONENT**

(30) Priority: 02.11.2022 GB 202216245
(71) Applicant: Rolls-Royce plc, London N1 9FX (GB)
(72) Inventor: Neale, Christopher, Derby, DE24 8BJ (GB)
(74) Representative: Rolls-Royce plc

(57) **Abstract**

The present disclosure provides a method of manufacturing a turbomachinery component for a gas turbine engine, comprising: receiving an ideal design of the turbomachinery component, the turbomachinery component comprising: an aerofoil portion comprising an aerofoil surface and having an ideal aerofoil wall thickness; and a platform portion comprising a platform surface coterminous with the aerofoil surface, the platform portion having an ideal radial platform thickness along a radial direction; determining an intermediate design of the turbomachinery component comprising an intermediate platform portion having an intermediate platform surface and an intermediate radial platform thickness which is greater than the ideal radial platform thickness; forming, by an investment casting process, an intermediate turbomachinery component based on the intermediate design, wherein the intermediate turbomachinery component comprises at least one detectable reference feature formed by an internal core element during the investment casting process; defining a datum system for machining the intermediate turbomachinery component comprising detecting the at least one reference feature and defining a radial datum based on the at least one reference feature; and machining the intermediate turbomachinery component using the datum system to remove material from at least the intermediate platform portion of the intermediate turbomachinery component to create a machined turbomachinery component.

## Description

### Field of Disclosure

The present disclosure relates to a method of manufacturing a turbomachinery component for a gas turbine engine.

### Background

Turbomachinery components for gas turbine engines include turbomachine blades, such as turbine blades, and guide vanes. Turbine blades and guide vanes have an aerofoil shape to provide a reaction to fluid flowing through the gas turbine engine. These components also have a platform at one end of the aerofoil and optionally, a shroud at the other end of the aerofoil, each defining a curved surface and forming an annular space therebetween for fluid flow. Turbine blades and guide vanes are usually of hollow form and have internal cooling passages or features which are configured to direct cooling air through the component. The blades and vanes are typically manufactured using a near-net-shape casting process, such as investment (lost-wax) casting.

In investment casting, a disposable or consumable pattern is formed in the shape of the component to be cast. The pattern is then coated in a ceramic, which sets to form a mould. The pattern is then removed from the mould, by melting or chemical leaching (dissolving) to leave a void in the mould, in the shape of the component to be cast. Molten metal is poured into the void, through the same opening that the pattern is removed through. The molten metal adopts the shape of the void, and hence the shape of the component to be formed. Once the metal is solidified, the mould is broken to remove the component.

The blade or vane is first cast using this process to form the aerofoil shape, the annulus surfaces, and the internal cooling passages. The internal features of the blade or vane, including the internal cooling passages, are formed by using an internal ceramic core during the investment casting process, which is subsequently removed by chemical leaching. Other features of the blade or vane are then machined by using a datum system which is defined using the cast aerofoil and platform and/or shroud surfaces. However, the manufacturing tolerances for these surfaces are relatively large due to the casting process and defining the datum system using these surfaces can result in a high aggregate tolerance (or tolerance stack) for the subsequently machined features. This reduces the accuracy of the components in the gas turbine engine and can reduce engine performance.

It is therefore desirable to provide an improved manufacturing method which seeks to address this issue.

### Summary

According to a first aspect of the present disclosure, there is provided a method of manufacturing a turbomachinery component for a gas turbine engine, comprising: receiving an ideal design of the turbomachinery component, the turbomachinery component comprising: an aerofoil portion comprising an aerofoil surface and having an ideal aerofoil wall thickness; and a platform portion comprising a platform surface coterminous with the aerofoil surface, the platform portion having an ideal radial platform thickness along a radial direction; determining an intermediate design of the turbomachinery component comprising an intermediate platform portion having an intermediate platform surface and an intermediate radial platform thickness which is greater than the ideal radial platform thickness; forming, by an investment casting process, an intermediate turbomachinery component based on the intermediate design, wherein the intermediate turbomachinery component comprises at least one detectable reference feature formed by an internal core element during the investment casting process; defining a datum system for machining the intermediate turbomachinery component comprising detecting the at least one reference feature and defining a radial datum based on the at least one reference feature; and machining the intermediate turbomachinery component using the datum system to remove material from at least the intermediate platform portion of the intermediate turbomachinery component to create a machined turbomachinery component.

Defining the radial datum may comprise determining a radial position of the least one reference feature relative to the intermediate platform portion of the intermediate turbomachinery component.

Detecting the at least one reference feature may comprise using a contact-based detection method.

The at least one reference feature may form part of an internal surface of the intermediate turbomachinery component. Detecting the at least one reference feature may comprise using a non-contact-based detection method.

Defining the datum system may comprise detecting multiple reference features and defining a radial datum based on the multiple reference features.

The intermediate turbomachinery component may comprise an intermediate aerofoil portion having an intermediate aerofoil surface corresponding to the aerofoil surface of the ideal design. Defining a datum system for machining the intermediate turbomachinery component may further comprise defining a plurality of aerofoil datums based on the intermediate aerofoil surface and the radial datum.

Machining the intermediate turbomachinery component may comprise determining a cutting path for the intermediate platform portion to achieve a substantially continuous transition between the platform surface and the aerofoil surface.

The cutting path may be based on a maximum possible size of the intermediate aerofoil portion based on a manufacturing tolerance of the investment casting process, such that the cutting path forms a path through the intermediate platform portion and offset away from the intermediate aerofoil surface.

The cutting path may be based on a minimum possible size of the intermediate aerofoil portion based on a manufacturing tolerance of the investment casting process, such that the cutting path forms a path through the intermediate platform portion and offset into the intermediate aerofoil surface.

The cutting path may be based on the ideal radial platform thickness and the aerofoil portion of the ideal design.

The method may further comprise creating a three-dimensional (3D) model of the intermediate turbomachinery component. The cutting path may be based on the 3D model and the ideal design.

The intermediate design may comprise an intermediate aerofoil portion having an intermediate aerofoil surface and an intermediate aerofoil wall thickness which is greater than the ideal aerofoil wall thickness.

The intermediate turbomachinery component may comprise an internal surface profile formed by the internal core element during the investment casting process. The method may further comprise, prior to machining the intermediate turbomachinery component, determining a position of the internal surface profile relative to the intermediate aerofoil surface and/or the intermediate platform surface; and measuring the intermediate aerofoil wall thickness and/or the intermediate radial platform thickness based on the position of the internal surface profile.

Machining the intermediate turbomachinery component may comprise machining the intermediate platform portion based on the datum system and a comparison between the measured intermediate radial platform thickness and the ideal radial platform thickness.

Machining the intermediate turbomachinery component may further comprise machining the intermediate aerofoil portion based on the datum system and a comparison between the measured intermediate aerofoil wall thickness and the ideal aerofoil wall thickness.

Determining the position of the internal surface profile may comprise scanning the intermediate turbomachinery component to create a 3D model of the intermediate turbomachinery component.

The 3D model may be based on a 3D scan of the intermediate turbomachinery component or based on multiple two-dimensional (2D) section scans of the intermediate turbomachinery component.

The method may further comprise defining a second datum system for machining the turbomachinery component, comprising defining a second radial datum based on the machined platform portion.

The turbomachinery component may be a turbomachine blade or a guide vane.

### Brief Description of the Drawings

Embodiments will now be described by way of example only, with reference to the Figures, in which:
Figure 1 is a sectional side view of a gas turbine engine;
Figure 2 is a side view of an example shroudless turbine blade;
Figure 3 is a side view of an example guide vane;
Figure 4 is a side view of an example shrouded turbine blade;
Figure 5 is a side view of an example ideal design of a turbine blade according to a first embodiment;
Figure 6 is a side view of an intermediate turbine blade according to a first embodiment;
Figure 7 is a schematic of an example aerofoil datum system;
Figure 8 shows a cutting path offset away from an intermediate aerofoil surface;
Figure 9 shows a cutting path offset into an intermediate aerofoil surface;
Figure 10 shows a cutting path based on an ideal design of the turbine blade;
Figure 11 is a side view of an example ideal design of a turbine blade according to a second embodiment;
Figure 12 is a side view of an intermediate turbine blade according to the second embodiment;
Figure 13 is a side view of a finished turbine blade according to the second embodiment;
Figure 14A is a side view of a turbine blade according to a third embodiment;
Figure 14B is a top view of the turbine blade shown in Figure 14A;
Figure 15A is a side view of a turbine blade according to a fourth embodiment;
Figure 15B is a top view of the turbine blade shown in Figure 15A;
Figure 16A is a side view of a turbine blade according to a fifth embodiment;
Figure 16B is a bottom view of the turbine blade shown in Figure 16A;
Figure 17A is a side view of a turbine blade according to a sixth embodiment;
Figure 17B is a top view of the turbine blade shown in Figure 17A;
Figure 18 is a side view of a guide vane according to a seventh embodiment;
Figure 19 is a side view of a turbine blade according to an eighth embodiment; and
Figure 20 is a flow diagram illustrating a method of manufacturing a turbomachinery component according to the present disclosure.

### Detailed Description

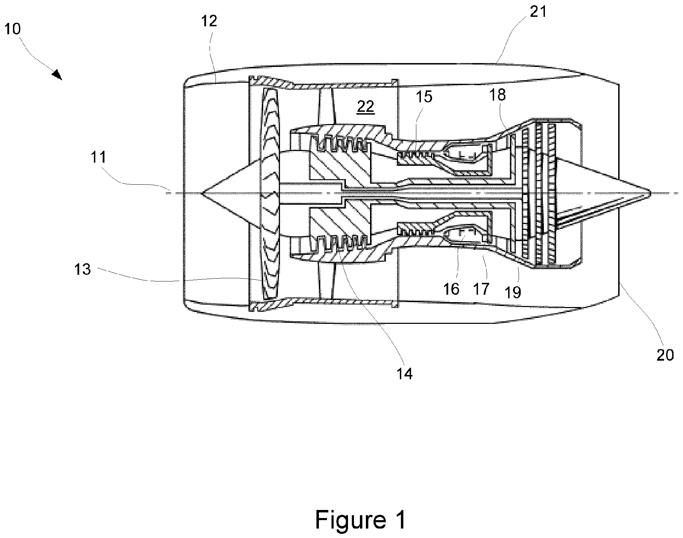

With reference to **Figure** 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

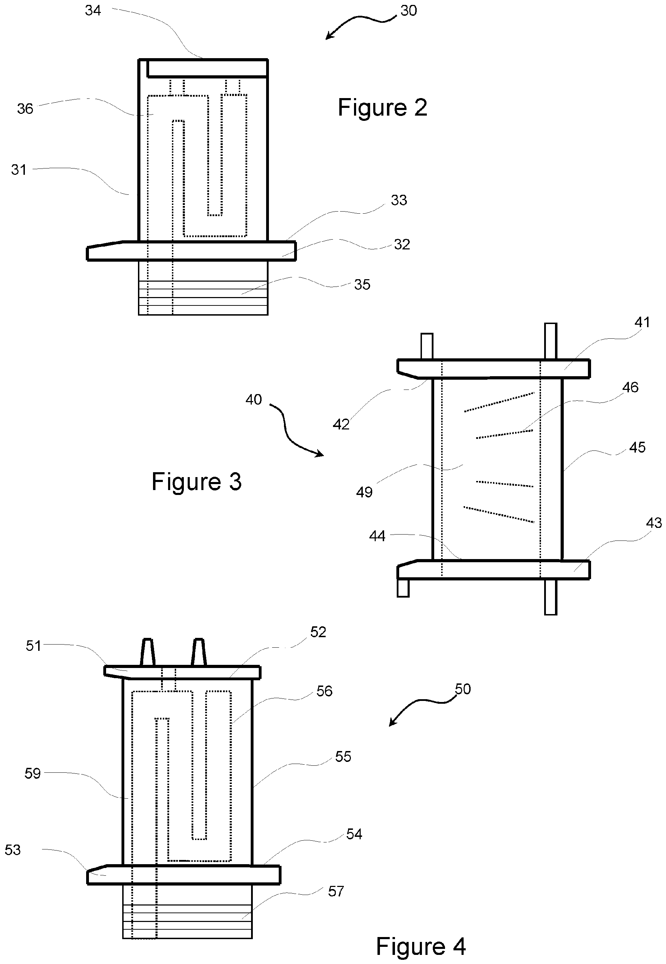

A turbomachinery component has an aerofoil portion that is configured to provide a reaction force to a fluid flow in a turbomachine, such as a gas turbine engine. Turbomachinery components in gas turbine engines may include turbomachine blades (e.g., turbine blades) and guide vanes. **Figures 2-4** show examples of turbomachinery components used in gas turbine engines. **Figure 2** shows a turbine blade 30 as an example of a turbomachinery component. The turbine blade 30 comprises an aerofoil portion 31 and a platform portion 32. The aerofoil portion 31 defines an aerofoil surface having a respective pressure surface and suction surface. The aerofoil portion 31 is attached to and extends radially from the platform portion 32 to a blade tip 34. The turbine blade 30 is known as a shroudless turbine blade 30 as it does not have a shroud portion at the blade tip 34. The platform portion 32 comprises a platform surface 33. The platform surface 33 faces in a radial direction and defines part of a generally cylindrical surface. The platform surface 33 is adjacent to and coterminous with the aerofoil surface 31. The turbine blade 30 also comprises a root 35 having one or more features for attaching the turbine blade 30 to a turbine disc. The turbine blade 30 also comprises an internal cooling passage 36 within the turbine blade 30. The internal cooling passage 36 extends through the turbine blade 30 and allows air to flow through the turbine blade 30. It will be appreciated that the internal cooling passage 36 may take any form which extends through the turbine blade 30.

**Figure 3** shows a guide vane 40 as another example of a turbomachinery component. The guide vane 40 comprises an aerofoil portion 49, an outer platform portion 41, and an inner platform portion 43. The aerofoil portion 49 defines an aerofoil surface 45 having a respective pressure surface and suction surface. The aerofoil portion 49 is attached to and extends radially between the inner platform portion 43 and the outer platform portion 41. The inner platform portion 43 comprises an inner platform surface 44. The outer platform portion 41 comprises an outer platform surface 42. The inner platform surface 44 faces in a radial direction and forms part of a generally cylindrical surface. The outer platform surface 42 faces in an opposite radial direction to the inner platform surface 44 and also forms part of a generally cylindrical surface. The inner platform surface 44 and the outer platform surface 42 are both adjacent to and coterminous with the aerofoil surface 45. The vane 40 also comprises an internal cooling passage 46 within the vane 40. The cooling passage 46 extends through the vane 40 and allows air to flow through the vane 40. It will be appreciated that the internal cooling passage 46 may take any form which extends through the vane 40.

**Figure 4** shows a shrouded turbine blade 50 as another example of a turbomachinery component. The shrouded turbine blade 50 comprises an aerofoil portion 59, a shroud portion 51, and a platform portion 53. The aerofoil portion 59 defines an aerofoil surface 55 having a respective pressure surface and suction surface. The aerofoil portion 59 is attached to and extends radially between the platform portion 53 and the shroud portion 51. The platform portion 53 comprises a platform surface 54. The shroud portion 51 comprises a shroud surface 52. The platform surface 54 faces in a radial direction and forms part of a generally cylindrical surface. The shroud surface 52 faces in an opposite radial direction to the platform surface 54 and also forms part of a generally cylindrical surface. The platform surface 54 and the shroud surface 54 are both adjacent to and coterminous with the aerofoil surface 55. The shrouded turbine blade 50 also comprises a root 57 having one or more features for attaching the turbine blade 50 to a turbine disc. The shrouded turbine blade 50 also comprises an internal cooling passage 56 within the shrouded turbine blade 50. The cooling passage 56 extends through the shrouded turbine blade 50 and allows air to flow through the shrouded turbine blade 50. It will be appreciated that the internal cooling passage 56 may take any form which extends through the turbine blade 50.

It will be appreciated in the following description that when features are described with respect to the platform portion or platform surface, that they are also applicable, mutatis mutandis, to the shroud portion or shroud surface, respectively.

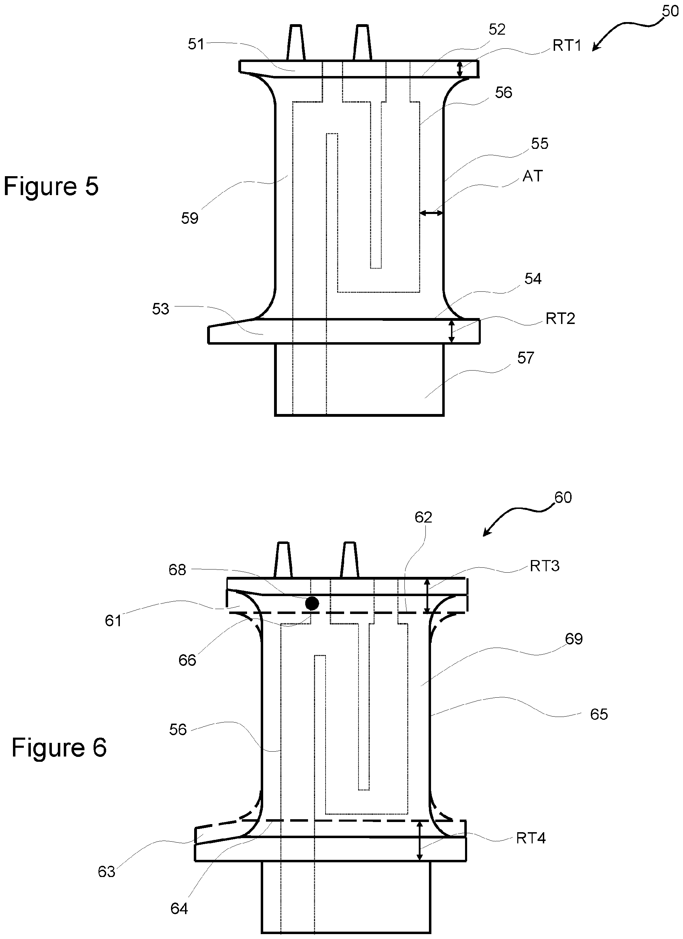

A first embodiment of the method of the present disclosure comprises receiving an ideal design of a turbomachinery component. The ideal design corresponds to the design of the turbomachinery component in which the dimensions of the features of the component have ideal values according to the design intent. The ideal values of the dimensions correspond to acceptable or optimal values. The ideal value of a dimension may be a single value or may be a range of values. **Figure 5** shows an ideal design of a turbomachinery component 50. For reference, the turbomachinery component 50 is shown as a shrouded turbine blade, which corresponds to the shrouded turbine blade as described with reference to Figure 4. It will be appreciated that the turbomachinery component as described with reference to this first embodiment can also be a shroudless turbine blade as described with reference to Figure 2 or a guide vane as described with reference to Figure 3.

The aerofoil portion 59 of the ideal design of the blade 50 comprises an ideal aerofoil wall thickness AT. The ideal aerofoil wall thickness AT corresponds to the thickness between the aerofoil surface 55 and the closest internal surface 56 of the blade 50, in a plane substantially perpendicular to the radial direction. The ideal aerofoil wall thickness AT may be constant or variable across the aerofoil portion 59. The platform portion 53 of the ideal design of the blade 50 comprises an ideal radial platform thickness RT2. The ideal radial platform thickness RT2 corresponds to the thickness of the platform portion 53 in the radial direction between the platform surface 54 and an opposing radial surface of the platform portion 53. The shroud portion 51 of the ideal design of the blade 50 comprises an ideal radial shroud thickness RT1. The ideal radial shroud thickness RT1 corresponds to the thickness of the shroud portion 51 in the radial direction between the shroud surface 52 and an opposing radial surface of the shroud portion 51. The ideal radial platform thickness RT2 and the ideal radial shroud thickness RT1 may be constant or variable. The ideal design of the blade 50 therefore defines ideal relative positions of the aerofoil surface, the platform surface, and the surfaces which are to be formed by an internal core during an investment casting process.

An intermediate design of the turbomachinery component is determined. **Figure 6** shows an intermediate turbomachinery component 60 which has been manufactured according to an intermediate design. The intermediate design is substantially similar to the ideal design but differs with respect to the radial platform thickness and the radial shroud thickness. The features of the intermediate design as compared to the ideal design are shown as dashed lines. The intermediate design of the blade 60 has an intermediate platform portion 63 and an intermediate platform surface 64. The intermediate platform portion 63 comprises an intermediate radial platform thickness RT4. The intermediate radial platform thickness RT4 is greater than the ideal radial platform thickness RT2. The intermediate design has an intermediate shroud portion 61 and an intermediate shroud surface 62. The intermediate shroud portion 61 comprises an intermediate radial shroud thickness RT3 which is greater than the ideal radial shroud thickness RT1. Accordingly, the intermediate platform portion 63 and the intermediate shroud portion 61 both have additional thickness in the radial direction with respect to the ideal design.

An investment (lost wax) casting process is used to form an intermediate turbomachinery component based on the intermediate design. The investment casting process is a known investment casting process. In the investment casting process, a ceramic core is created which corresponds to the internal surface profile, including the internal cooling passages, of the turbomachinery component. A disposable or consumable pattern is formed in the shape according to the intermediate design, with the ceramic core placed inside the pattern. The pattern is then coated in a ceramic, which sets to form a mould. The pattern is then removed from the mould, by melting or chemical leaching (dissolving) to leave a void in the mould, in the shape of the intermediate turbomachinery component. Molten metal is poured into the void, through the same opening that the pattern is removed through. The molten metal adopts the shape of the void, and hence the shape of the intermediate turbomachinery component. Once the metal is solidified, the mould is broken to remove the intermediate turbomachinery component. The ceramic core is then removed by chemical leaching to create a void in the intermediate turbomachinery component which can correspond to the internal cooling passages.

The intermediate turbomachinery component, which in this example is an intermediate design of a turbine blade 60, comprises an intermediate aerofoil portion 69, an intermediate shroud portion 61, and an intermediate platform portion 63. The intermediate aerofoil portion 69 corresponds to the ideal aerofoil portion 59, with only minimal differences due to manufacturing tolerances. The intermediate aerofoil portion 69 has a corresponding intermediate aerofoil surface 65. The intermediate turbomachinery component 60 comprises a core-formed surface 56 which defines the void formed by the ceramic core in the casting process. The core-formed surface 56 is therefore created by the ceramic core in the casting process. The core-formed surface 56 is an internal surface of the intermediate turbomachinery component 60. A feature of the core-formed surface 56 can be used as a reference feature 66. The reference feature 66 may be a surface, a point on a surface, or an edge found on the core-formed surface. The reference feature 66 is found on both the core-formed surface 56 of the intermediate turbomachinery component 60 and the internal surface of the ideal design of the blade 50.

The reference feature 66 is detectable by a suitable detection tool. In the intermediate turbomachinery component 60, the reference feature is a surface 66 of the core-formed surface 56 which can be accessed by a contact-based detection tool. Examples of contact-based detection tools include Coordinate Measuring Machines (CMMs) and Articulated Arms. In this instance, the reference feature 66 is visible from outside the intermediate turbomachinery component 60. The reference feature 66 can therefore also be detected by an optical detection method, such as 3D structured-light scanning. In other examples, the reference feature 66 may not be accessible by a contact-based detection tool and may not be visible from outside the intermediate turbomachinery component 60. In such examples, the reference feature may only be detected by a non-contact-based detection tool or method. For example, the reference feature may only be detectable by any suitable non-destructive inspection tool or method including but not limited to X-ray, ultrasonic, magnetic-based, liquid penetrant, radiographic, remote visual inspection (RVI), eddy-current testing, low-coherence interferometry, or similar. For example, the non-destructive inspection tool may include CT scanning.

When the reference feature 66 is detected, its three-dimensional position is recorded, for example by generating XYZ coordinates. This position is then referenced to the corresponding position of the feature on the ideal design of the blade 50. Accordingly, the reference feature 66 can be used as a radial datum 68. The radial datum 68 is used as a reference point of the core, from which the radial position of the features of the ideal design of the blade 50 can be located. The radial datum 68 can therefore be used to determine where the platform surface and the shroud surface should be located. In other examples, multiple reference features may be detected, defining respective radial datums. Each of the radial datums defines a respective reference point of the core, from which the radial position of the features of the ideal design of the blade can be located.

An average radial position for each of the features of the blade may be calculated based on the multiple radial datums.

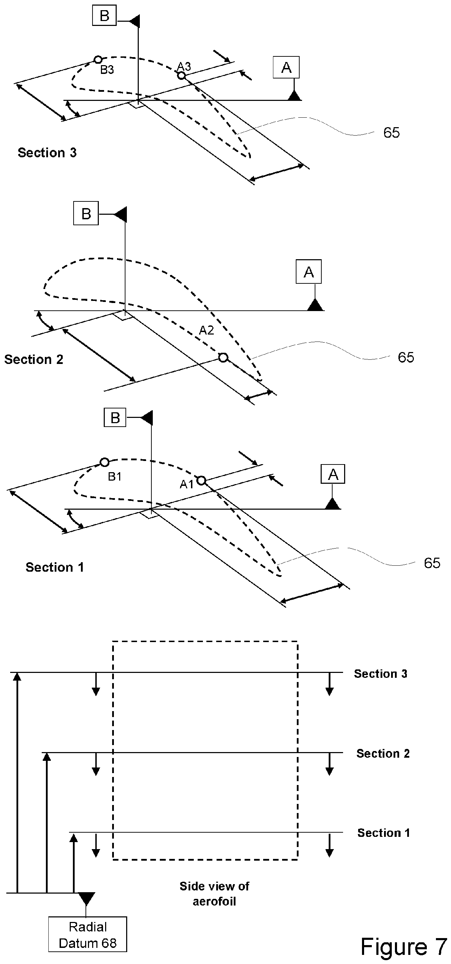

The method further comprises defining a plurality of aerofoil datums. **Figure 7** illustrates an example method of defining a plurality of aerofoil datums. A plurality of reference points are identified at a plurality of radial positions through the intermediate aerofoil portion 69. In Figure 7, three radial positions are chosen for identifying the reference points. At each of these radial positions, at least one reference point is identified on the radial cross section of the intermediate aerofoil portion at the respective radial position. The radial position is measured from the radial datum, which is defined as described above. At a first radial position, a first radial cross-section, section 1, is identified. A first reference point A1 and a second reference point B1 on the intermediate aerofoil surface 65 are defined in section 1. At a second radial position, a second radial cross-section, section 2 is identified. A third reference point A2 on the intermediate aerofoil surface 65 is defined in section 2. At a third radial position, a third radial cross-section, section 3 is identified. A fourth reference point A3 and a fifth reference point B3 on the intermediate aerofoil surface 65 are defined in section 3. The five reference points are combined with the radial datum 68 to define a 6-point nest which fully locates the intermediate aerofoil surface in 3D space and defines an orthogonal datum system. The datum system fully constrains and allows accurate machining of the intermediate turbomachinery component.

The method further comprises machining the intermediate turbomachinery component using the datum system. Machining the intermediate turbomachinery component is done in order to bring the turbomachinery component towards the ideal design, which defines the ideal relative positions of the aerofoil surface, the platform surface, and the core-formed surface. In particular, this machining includes removing material from at least the intermediate platform portion. As the intermediate platform portion has excess material thickness relative to the ideal platform portion, material needs to be removed from the intermediate platform portion in order to produce a turbomachinery component which is according to or close to the ideal design. In order to remove material from the intermediate platform portion, a cutting path is determined for the intermediate platform portion. The cutting path is the path that a cutting element of a machining tool may take when removing material from the intermediate platform portion. It is desired for the turbomachinery component to have a substantially continuous or smooth transition between the platform surface and the aerofoil surface, in order to maximise aerodynamic performance of for the turbomachinery component. Therefore, the cutting path is configured to achieve a substantially continuous transition between the platform surface and the aerofoil surface, for example by creating a radius or fillet between the platform surface and the aerofoil surface to blend the surfaces together.

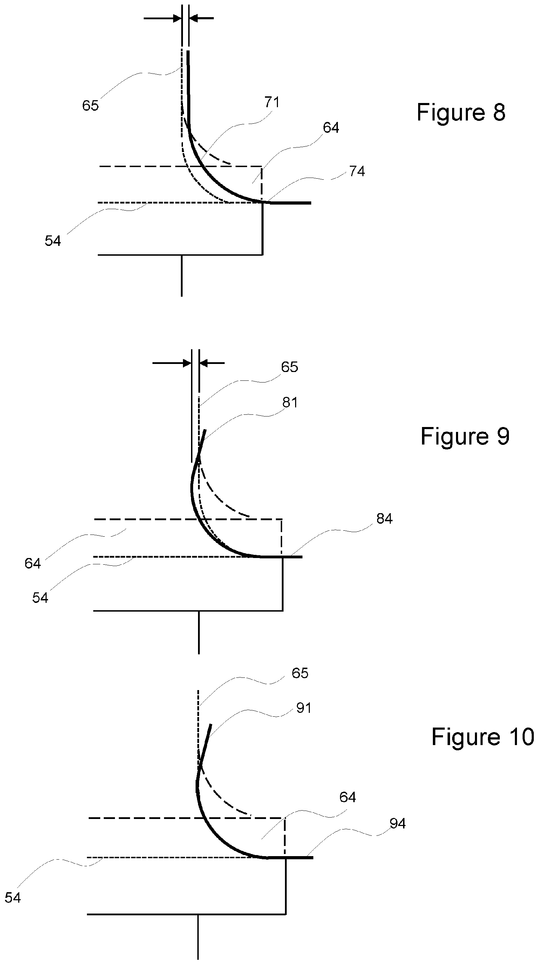

The cutting path 71 may be based on a maximum possible size of the intermediate aerofoil portion, based on a manufacturing tolerance of the investment casting process, as shown in **Figure 8**. The cutting path 71 forms a path through the intermediate platform portion 64 to remove material from the intermediate platform portion and create a platform surface 74 which is according to or close to that of the ideal design, such that the platform portion has a thickness at or close to the ideal radial platform thickness RT2. Using a manufacturing tolerance of the investment casting process and the ideal size of the aerofoil portion, the maximum possible size of the intermediate aerofoil portion is determined. The cutting path 71 is offset away from the maximum possible size of the intermediate aerofoil surface 65 to avoid undercutting the intermediate aerofoil surface 65. In some cases, the cutting path 71 may not cut into the intermediate aerofoil surface 65 if the intermediate aerofoil portion has a smaller size than the maximum size. Accordingly, the cutting path 71 forms a continuous transition or radius between the platform surface 74 and the intermediate aerofoil surface 65.

Alternatively, the cutting path 81 may be based on a minimum possible size of the intermediate aerofoil portion, based on a manufacturing tolerance of the investment casting process, as shown in **Figure 9**. The cutting path 81 forms a path through the intermediate platform portion 64 to remove material from the intermediate platform portion 64 and create a platform surface 84 which is according to or close to that of the ideal design, such that the platform portion has a thickness at or close to the ideal radial platform thickness RT2. Using a manufacturing tolerance of the investment casting process and the ideal size of the aerofoil portion, the minimum possible size of the intermediate aerofoil portion is determined. The cutting path 81 is offset into the maximum possible size of the intermediate aerofoil surface 65 to avoid leaving unnecessary additional material on the intermediate aerofoil portion or the final radius between the platform surface 84 and the aerofoil surface. In some cases, the cutting path 81 may cut into the intermediate aerofoil surface 65 if the intermediate aerofoil portion has a larger size than the minimum size. Accordingly, the cutting path 81 forms a continuous transition or radius between the platform surface 84 and the intermediate aerofoil surface 65.

Alternatively, the cutting path 91 may be based on the ideal design of the turbomachinery component, as shown in **Figure 10**. In particular, the cutting path 91 may be based on the dimensions of the ideal platform portion and the ideal aerofoil portion. The cutting path 91 forms a path through the intermediate platform portion 64 to remove material from the intermediate platform portion 64 and create a platform surface 94 which is according to or close to that of the ideal design, such that the platform portion has a thickness at or close to the ideal radial platform thickness RT2. The cutting path 91 also forms a path relative to the intermediate aerofoil 65 which is based on achieving the ideal dimensions of the aerofoil portion and the ideal aerofoil surface. In some instances, the cutting path 91 may cut into the intermediate aerofoil surface 65 if the intermediate aerofoil portion has a larger size than the ideal aerofoil portion, and in other instances, the cutting path 91 may not cut into the intermediate aerofoil surface 65 if the intermediate aerofoil portion is a smaller size than the ideal aerofoil portion. Accordingly, the cutting path 91 forms a continuous transition or radius between the platform surface 94 and the intermediate aerofoil surface 65.

Alternatively, the cutting path may be determined based on a three-dimensional (3D) model of the intermediate turbomachinery component. The 3D model may be based on a 3D scan of the intermediate turbomachinery component. The 3D scan may be conducted by contact 3D scanning, non-contact 3D scanning, laser scanning, structured light scanning, modulated light scanning, or volumetric scanning. The 3D model may alternatively be based on a plurality of 2D scans at different depths along the turbomachinery component. The 3D model enables the cast shape of the intermediate turbomachinery component to be estimated. Accordingly, the cast dimensions of the intermediate platform portion and the intermediate aerofoil portion can be estimated. The estimated cast dimensions of the intermediate platform portion and the intermediate aerofoil portion are used to determine a cutting path which achieves a continuous or smooth transition between the intermediate platform surface and the intermediate aerofoil surface. The cutting path also forms a path through the intermediate platform portion to remove material from the intermediate platform portion and create a platform surface which is according to or close to that of the ideal design, such that the platform portion has a thickness at or close to the ideal radial platform thickness RT2.

It will be appreciated that the cutting paths as described above for the transition between the intermediate platform surface and the intermediate aerofoil surface are also applicable, mutatis mutandis, to the transition between the intermediate shroud surface and the intermediate aerofoil surface.

The method further comprises machining the intermediate turbomachinery component according to the determined cutting path. The platform surface and/or shroud surface are machined to a relatively tight tolerance, for example to ± 0.05 mm, which is tighter than would be achieved by the investment casting process.

The method may further comprise defining a second datum system for machining the turbomachinery component. The turbomachinery component may undergo further machining processes downstream of the current process, which require a suitable datum system, including a radial datum. In some cases, the previously determined radial datum may not be practical for the further machining processes. In these cases, a second radial datum can be defined on the machined platform surface and/or the machined shroud surface. As the machined platform surface and the machined shroud surface are machined to a relatively tight tolerance, an accurate radial datum can be set for any further machining processes. A second set of aerofoil datums may be established based on the machined aerofoil surface, in a substantially similar manner to the example datum process described with reference to Figure 7.

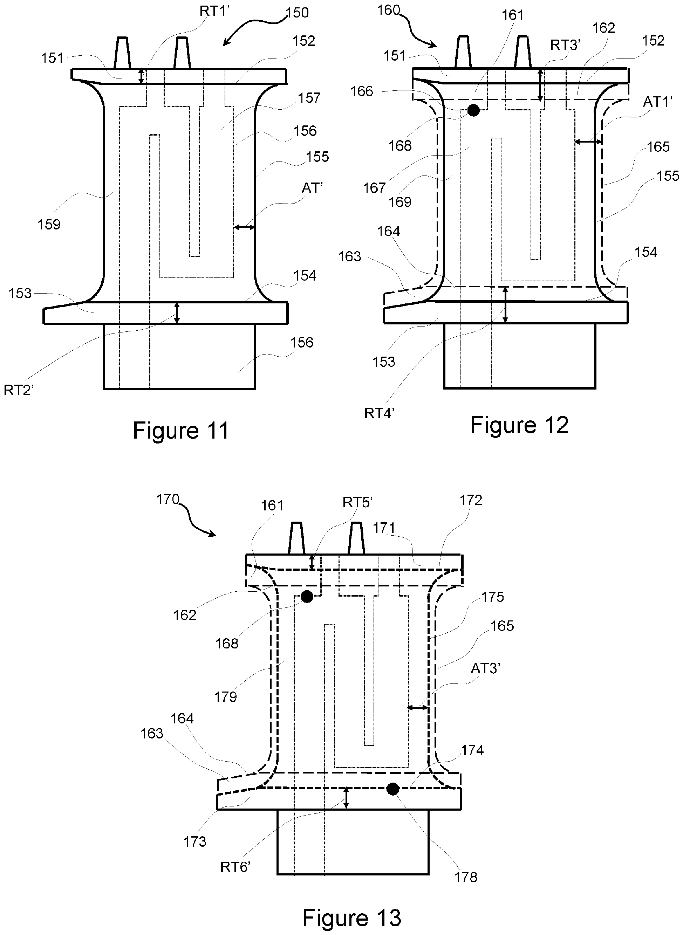

A second embodiment of the method of the present disclosure is described with reference to **Figures 11-13**. The method comprises receiving an ideal design of a turbomachinery component 151. The ideal design corresponds to the design of the turbomachinery component in which the dimensions of the features of the component have ideal values according to the design intent. The ideal values of the dimensions are acceptable or optimal values. The ideal value of a dimension may be a single value or may be a range of values. As with the first embodiment, the ideal design defines ideal relative positions of the aerofoil surface, the platform surface, and the surfaces which are to be formed by an internal core during an investment casting process. **Figure 11** shows an ideal design of a turbomachinery component 150. For reference, the turbomachinery component 150 is shown as a shrouded turbine blade, which corresponds to the shrouded turbine blade as described with reference to Figure 4. It will be appreciated that the turbomachinery component as described with reference to this second embodiment can also be a shroudless turbine blade as described with reference to Figure 2 or a guide vane as described with reference to Figure 3.

The aerofoil portion 159 of the ideal design of the blade 150 comprises an ideal aerofoil wall thickness AT'. The ideal aerofoil wall thickness AT' corresponds to the thickness between the aerofoil surface 155 and the closest internal surface 156 of the blade 150, in a plane substantially perpendicular to the radial direction. The ideal aerofoil wall thickness AT' may be constant or variable across the aerofoil portion 159. The platform portion 153 of the ideal design of the blade 150 comprises an ideal radial platform thickness RT2'. The ideal radial platform thickness RT2' corresponds to the thickness of the platform portion 153 in the radial direction between the platform surface 154 and an opposing radial surface of the platform portion 153. The shroud portion 151 of the ideal design of the blade 150 comprises an ideal radial shroud thickness RT1'. The ideal radial shroud thickness RT1' corresponds to the thickness of the shroud portion 151 in the radial direction between the shroud surface 152 and an opposing radial surface of the shroud portion 151. The ideal radial platform thickness RT2' and the ideal radial shroud thickness RT1' may be constant or variable.

An intermediate design of the turbomachinery component is determined. **Figure 12** shows an intermediate turbomachinery component 160 which has been manufactured according to an intermediate design. The intermediate design is substantially similar to the ideal design but differs with respect to the radial platform thickness, the radial shroud thickness, and the aerofoil wall thickness. The features of the intermediate design relative to the ideal design are shown as dashed lines. The intermediate design has an intermediate platform portion 163 and an intermediate platform surface 164. The intermediate platform portion 163 comprises an intermediate radial platform thickness RT4'. The intermediate radial platform thickness RT4' is greater than the ideal radial platform thickness RT2'. The intermediate design has an intermediate shroud portion 161 and an intermediate shroud surface 162. The intermediate shroud portion 161 comprises an intermediate radial shroud thickness RT3' which is greater than the ideal radial shroud thickness RT1'. Accordingly, the intermediate platform portion 163 and the intermediate shroud portion 161 both have additional thickness in the radial direction with respect to the ideal design. The intermediate design also has an intermediate aerofoil portion 169 having an intermediate aerofoil wall thickness AT1'. The intermediate aerofoil wall thickness AT1' is greater than the ideal aerofoil wall thickness AT'.

An investment (lost wax) casting process is used to form an intermediate turbomachinery component based on the intermediate design. The investment casting process is substantially similar to that described with reference to the first embodiment.

The intermediate turbomachinery component 160, which in this example is an intermediate design of a turbine blade 160, comprises the intermediate aerofoil portion 169, an intermediate shroud portion 161, and an intermediate platform portion 163. The intermediate aerofoil portion 169 has a corresponding intermediate aerofoil surface 165. The intermediate turbomachinery component 160 comprises a core-formed surface 167 which defines the void formed by the ceramic core in the casting process. The core-formed surface 167 is therefore created by the ceramic core in the casting process. The core-formed surface 167 is an internal surface of the intermediate turbomachinery component 160. A feature of the core-formed surface 167 can be used as a reference feature 166. The reference feature 166 may be a surface, a point on a surface, or an edge found on the core-formed surface 167. The reference feature 166 is found on both the core-formed surface 167 of the intermediate turbomachinery component 160 and the internal surface 156 of the ideal design of the turbomachinery component 150.

The reference feature 166 is used to define a radial datum 168, in a substantially similar manner as described for the first embodiment. The radial datum 168 is used as a reference point from which the radial position of the features of the ideal design of the blade 150 can be located. The radial datum 168 can therefore be used to determine where the platform surface and the shroud surface should be located.

The core-formed surface 167 defines an internal surface profile of the intermediate turbomachinery component 160. The position of the internal surface profile relative to the other features of the intermediate turbomachinery component 160 is determined. In particular, the position of the internal surface profile relative to the intermediate aerofoil surface, the intermediate platform surface, and/or the intermediate shroud surface is determined. This may be determined by measuring the dimensions of the blade at different points, in particular along the intermediate aerofoil surface, the intermediate platform surface, and/or the intermediate shroud surface. The dimension measurement includes a measurement of the intermediate aerofoil wall thickness, the intermediate radial platform thickness, and the intermediate radial shroud thickness, as cast. The dimensions may be measured using a sonic or eddy current process. The dimension measurements may be compared to the dimensions of the ideal design to determine how much material needs to be removed from the intermediate turbomachinery component 160 to bring the component towards or close to the ideal design. The radial datum 168 can be used to locate the radial positions of the platform surface and the shroud surface during the dimension measurement.

Alternatively, the intermediate turbomachinery component 160 is scanned to create a 3D model of the intermediate turbomachinery component. The 3D model may be created by performing a 3D scan of the intermediate turbomachinery component, using contact 3D scanning, non-contact 3D scanning, laser scanning, structured light scanning, modulated light scanning, or volumetric scanning. The 3D model may alternatively be based on a plurality of 2D scans at different depths along the turbomachinery component. The 3D model is a model of the overall shape of the intermediate turbomachinery component, including the overall shape of the internal surface profile. The 3D model can therefore be used to determine the position of the internal surface profile with respect to the intermediate aerofoil surface, the intermediate platform surface, and/or the intermediate shroud surface. The 3D model can be used to measure the actual dimensions of the intermediate turbomachinery component, including the actual aerofoil wall thickness, the actual radial platform thickness, and the actual radial platform thickness. The actual dimensions are compared to the dimensions of the ideal design to determine how much material needs to be removed from the intermediate turbomachinery component 160 to bring the blade towards or close to the ideal design. The ideal design defines the ideal relative positions of the aerofoil surface, the platform surface, and the core-formed surface.

The intermediate aerofoil portion 169, the intermediate platform portion 163, and the intermediate shroud portion 161 are then machined to remove sufficient material and create the machined blade 170, as shown in **Figure 13**. The machined blade 170 is close to the ideal design of the blade. The machined blade 170 has a machined aerofoil portion 179 having a machined aerofoil surface 175 and an aerofoil wall thickness AT3', a machined platform portion 173 having a machined platform surface 174 and a radial platform wall thickness RT6', and a machined shroud portion 171 having a machined shroud surface 172 and a radial shroud wall thickness RT5'. A substantially continuous transition may be achieved between the machined aerofoil surface 175 and the machined platform surface 174, and between the machined aerofoil surface 175 and the machined shroud surface 172. The machining process may achieve a relatively tight manufacturing tolerance, for example to ± 0.05 mm, which is tighter than would be achieved by the investment casting process.

For the second embodiment, as with the first embodiment, it may be necessary to define a second datum system for further or downstream machining processes. A second radial datum 178 can be defined on the machined platform surface 174 and/or the machined shroud surface 172. As the machined platform surface 174 and the machined shroud surface 172 are machined to a relatively tight tolerance, an accurate radial datum 178 can be defined on these surfaces, to be used for any further machining processes. A second set of aerofoil datums may be established based on the machined aerofoil surface, in a substantially similar process to the example datum process described with reference to Figure 7.

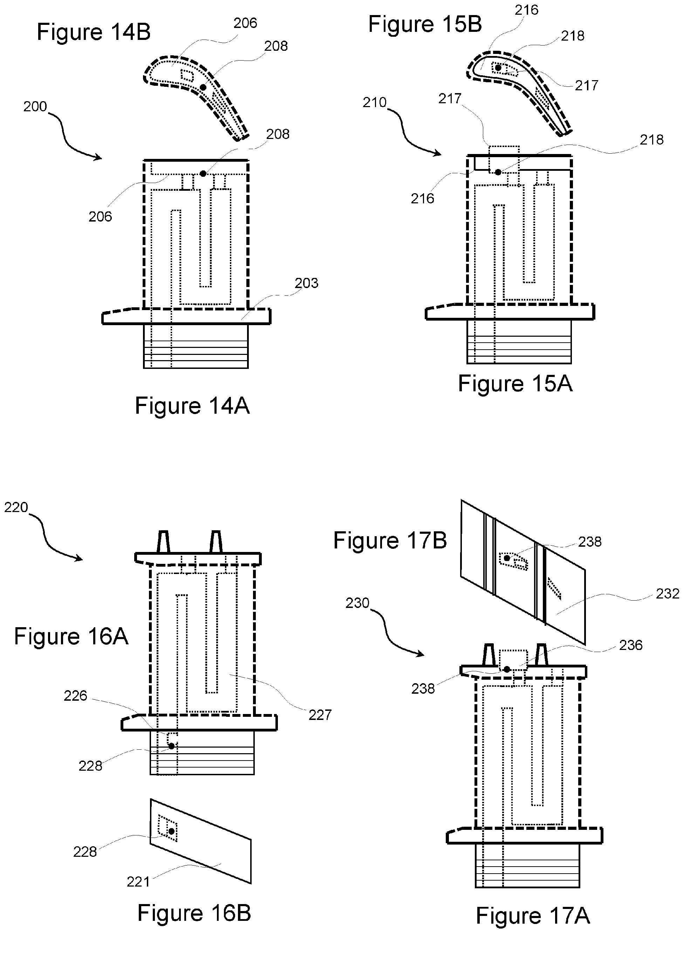

**Figures 14A to 19** show examples of intermediate turbomachinery components and associated radial datums, which can be used in the method of the present disclosure.

**Figures 14A and 14B** show an example intermediate design of a shroudless blade 200 according to a third embodiment. The blade 200 comprises substantially the same features as described for the shroudless blade 20, with reference to Figure 2. The blade 200 comprises a gutter 206 formed at the opposite end to the platform portion 203. The gutter 206 is formed by the ceramic core during the investment casting process. Figure 14B shows a top view of the blade 200, in which it can be seen that the gutter 206 is visible and accessible from outside the blade 200. The position of the gutter 206 can therefore be established by a contact-based method or a non-contact-based method. A surface or point of the gutter 206 can therefore be used to define a radial datum 208.

**Figures 15A and 15B** show an example intermediate design of a shroudless blade 210 according to a fourth embodiment. The blade 210 is substantially similar to the blade 200 as described with reference to Figures 14A and 14B, with the difference that the gutter 216 is not formed by the ceramic core during the investment casting process. Instead, a reference feature 217 is formed by the ceramic core during the investment casting process and includes surfaces which are visible and accessible from outside the blade 210, which is shown by the top view of the blade 210 from Figure 15B. The position of the reference feature 217 can therefore by established by a contact-based method or a non-contact-based method. The surfaces of the reference feature 217 can be used to define a radial datum 218.

**Figures 16A and 16B** show an example intermediate design of a shrouded blade 220 according to a fifth embodiment. The blade 220 is substantially similar to the shrouded blade described in the first and second embodiments and shown in Figures 5-6 and 11-13 but differs with respect to the reference feature. The reference feature 226 is formed as a projection from the core-formed surface 227. As shown in the bottom view of the blade in Figure 16B, the reference feature 226 may be accessed from the outside of the blade 220. The position of the reference feature 226 can therefore by established by a contact-based method or a non-contact-based method. The reference feature 226 can therefore be used to define a radial datum 228.

**Figures 17A and 17B** show an example intermediate design of a shrouded blade 230 according to a sixth embodiment. The blade 230 is substantially similar to the shrouded blade described with reference to Figures 16A and 16B but differs with respect to the reference feature. The reference feature 236 is located in the shroud portion 232 and is a core-formed feature. As shown in the top view of the blade in Figure 17B, the reference feature 236 may be accessed from the outside of the blade 230. The position of the reference feature 236 can therefore by established by a contact-based method or a non-contact-based method. Surfaces or points of the reference feature 236 can therefore be used to define a radial datum 238.

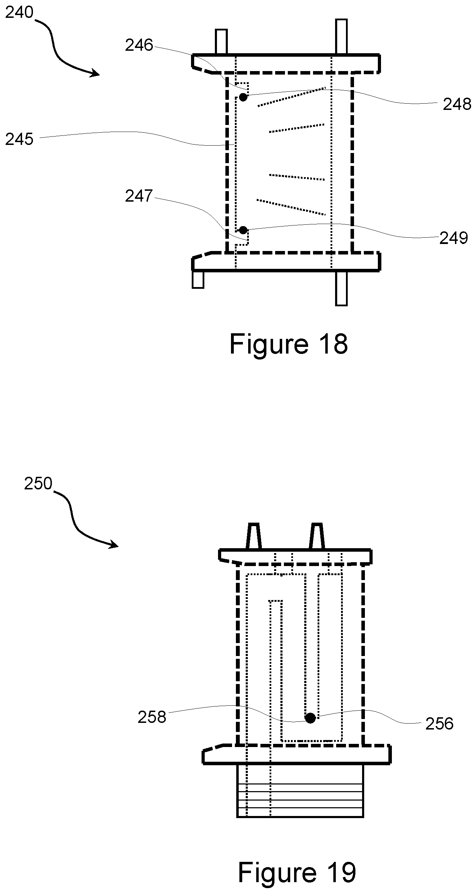

**Figure 18** shows an example intermediate design of a guide vane 240 according to a seventh embodiment. The guide vane 240 comprises substantially the same features as described for the guide vane 40, with reference to Figure 3. The guide vane 40 also comprises two reference features 246, 247 which are formed by the core. The reference features 246, 247 are formed as protrusions extending from the core-formed surface 245. The positions of the reference features 246, 247 can therefore be established by a contact-based method or a non-contact-based method. Each of the reference features 246, 247 can be used to define a respective radial datum 248, 249.

**Figure 19** shows an example intermediate design of a shrouded blade 250 according to an eighth embodiment. The blade 250 is substantially similar to the shrouded blade described with reference to Figures 16A-17B but differs with respect to the reference feature. The reference feature 256 is an internal core-formed surface. The reference feature 256 is not visible and cannot be accessed from the outside of the blade 250. The position of the reference feature 256 can therefore only be established by a non-contact-based method. The reference feature 256 can therefore be used to define a radial datum 258.

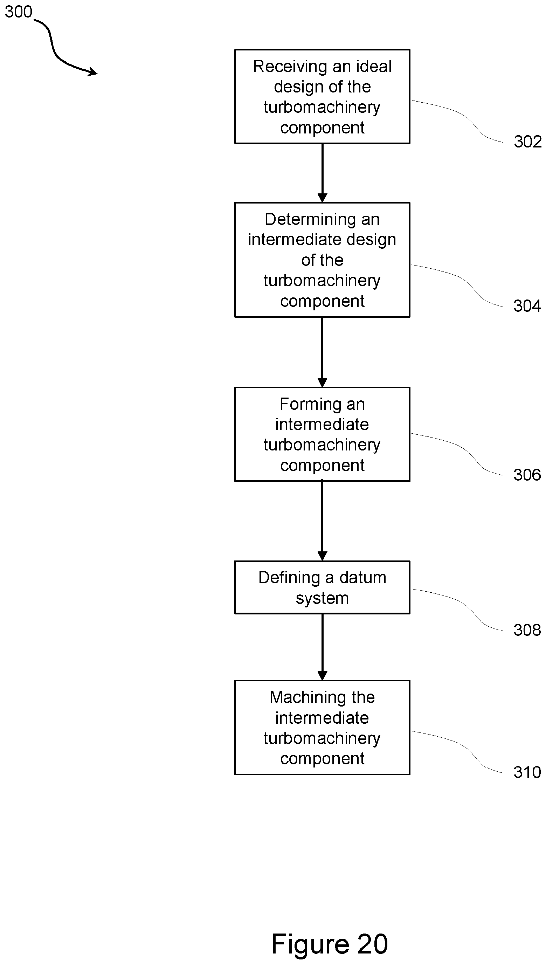

**Figure 20** is a flow diagram showing a method 300 of manufacturing a turbomachinery component for a gas turbine engine, for example as in accordance with the examples discussed above with reference to Figures 2-19. In a first step 302, the method comprises receiving an ideal design of the turbomachinery component, the turbomachinery component comprising: an aerofoil portion comprising an aerofoil surface and having an ideal aerofoil wall thickness; and a platform portion comprising a platform surface coterminous with the aerofoil surface, the platform portion having an ideal radial platform thickness along a radial direction. In a second step 304, the method comprises determining an intermediate design of the turbomachinery component comprising an intermediate platform portion having an intermediate platform surface and an intermediate radial platform thickness which is greater than the ideal radial platform thickness. In a third step 306, the method comprises forming, by an investment casting process, an intermediate turbomachinery component based on the intermediate design, wherein the intermediate turbomachinery component comprises at least one detectable reference feature formed by an internal core element during the investment casting process. In a fourth step 308, the method comprises defining a datum system for machining the intermediate turbomachinery component comprising detecting the at least one reference feature and defining a radial datum based on the at least one reference feature. In a fifth step 310, the method comprises machining the intermediate turbomachinery component using the datum system to remove material from at least the intermediate platform portion of the intermediate turbomachinery component to create a machined turbomachinery component.

The method of the present disclosure provides an improved method of manufacturing a turbomachinery component with increased accuracy. By using a core-formed surface as the basis for a radial datum, the platform surface and shroud surface can be formed with reduced manufacturing tolerances. The method can therefore achieve relative positions of the platform surface, the shroud surface, and the core-formed surface which are close to the ideal design. As the machined platform surfaces and shroud surfaces have reduced manufacturing tolerances than typical cast surfaces, features which are formed in downstream processes using these machined surfaces for radial datums, can be formed more accurately. Therefore, overall tolerance stacks for the component can be reduced. This can lead to reduced variation between each component produced by the manufacturing process. This can also enable improved aerodynamic efficiency and performance as the surface dimensions and relative surface positions are closer to the design intent. As each component can be formed with greater accuracy, gaps between adjacent components (for example, between a blade and an adjacent vane) can be reduced, leading to reduced air leakage and improved efficiency. The method can also reduce manufacturing cost. As the intermediate component is cast with additional material thickness, which will eventually be removed, the component can be cast with larger manufacturing tolerances than at present. This can improve the yield from the casting process and reduce overall manufacturing cost. As the eventual platform surface and shroud surface are formed by machining instead of casting, modifications to the platform surface and shroud surface can be made without having to change tooling used for the casting process.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of manufacturing a turbomachinery component for a gas turbine engine, comprising:
receiving an ideal design of the turbomachinery component, the turbomachinery component comprising:
an aerofoil portion comprising an aerofoil surface and having an ideal aerofoil wall thickness; and
a platform portion comprising a platform surface coterminous with the aerofoil surface, the platform portion having an ideal radial platform thickness along a radial direction;
determining an intermediate design of the turbomachinery component comprising an intermediate platform portion having an intermediate platform surface and an intermediate radial platform thickness which is greater than the ideal radial platform thickness;
forming, by an investment casting process, an intermediate turbomachinery component based on the intermediate design, wherein the intermediate turbomachinery component comprises at least one detectable reference feature formed by an internal core element during the investment casting process;
defining a datum system for machining the intermediate turbomachinery component comprising detecting the at least one reference feature and defining a radial datum based on the at least one reference feature; and
machining the intermediate turbomachinery component using the datum system to remove material from at least the intermediate platform portion of the intermediate turbomachinery component to create a machined turbomachinery component.

2. The method as claimed in Claim 1, wherein defining the radial datum comprises determining a radial position of the least one reference feature relative to the intermediate platform portion of the intermediate turbomachinery component.

3. The method as claimed in Claim 1 or Claim 2, wherein detecting the at least one reference feature comprises using a contact-based detection method.

4. The method as claimed in Claim 1 or Claim 2, wherein the at least one reference feature forms part of an internal surface of the intermediate turbomachinery component; and
wherein detecting the at least one reference feature comprises using a non-contact-based detection method.

5. The method as claimed in any one of the preceding claims, wherein defining the datum system comprises detecting multiple reference features and defining a radial datum based on the multiple reference features.

6. The method as claimed in any one of the preceding claims, wherein the intermediate turbomachinery component comprises an intermediate aerofoil portion having an intermediate aerofoil surface corresponding to the aerofoil surface of the ideal design; and
wherein defining a datum system for machining the intermediate turbomachinery component further comprises defining a plurality of aerofoil datums based on the intermediate aerofoil surface and the radial datum.

7. The method as claimed in Claim 6, wherein machining the intermediate turbomachinery component comprises determining a cutting path for the intermediate platform portion to achieve a substantially continuous transition between the platform surface and the aerofoil surface.

8. The method as claimed in Claim 7, wherein the cutting path is based on a maximum possible size of the intermediate aerofoil portion based on a manufacturing tolerance of the investment casting process, such that the cutting path forms a path through the intermediate platform portion and offset away from the intermediate aerofoil surface.

9. The method as claimed in Claim 7, wherein the cutting path is based on a minimum possible size of the intermediate aerofoil portion based on a manufacturing tolerance of the investment casting process, such that the cutting path forms a path through the intermediate platform portion and offset into the intermediate aerofoil surface.

10. The method as claimed in Claim 7, wherein the cutting path is based on the ideal radial platform thickness and the aerofoil portion of the ideal design.

11. The method as claimed in Claim 7, further comprising creating a three-dimensional (3D) model of the intermediate turbomachinery component; and
wherein the cutting path is based on the 3D model and the ideal design.

12. The method as claimed in any one of Claims 1 to 5, wherein the intermediate design comprises an intermediate aerofoil portion having an intermediate aerofoil surface and an intermediate aerofoil wall thickness which is greater than the ideal aerofoil wall thickness.

13. The method as claimed in Claim 12, wherein the intermediate turbomachinery component comprises an internal surface profile formed by the internal core element during the investment casting process;
the method further comprising, prior to machining the intermediate turbomachinery component, determining a position of the internal surface profile relative to the intermediate aerofoil surface and/or the intermediate platform surface; and
measuring the intermediate aerofoil wall thickness and/or the intermediate radial platform thickness based on the position of the internal surface profile.

14. The method as claimed in Claim 13, wherein machining the intermediate turbomachinery component comprises machining the intermediate platform portion based on the datum system and a comparison between the measured intermediate radial platform thickness and the ideal radial platform thickness.

15. The method as claimed in Claim 13 or Claim 14, wherein machining the intermediate turbomachinery component further comprises machining the intermediate aerofoil portion based on the datum system and a comparison between the measured intermediate aerofoil wall thickness and the ideal aerofoil wall thickness.
